# EUROPÄISCHE PATENTSCHRIFT

(11) **EP 0 529 671 B1**
(45) Veröffentlichungstag und Bekanntmachung des Hinweises auf die Patenterteilung: **02.08.1995**
(21) Anmeldenummer: 92114819.3
(22) Anmeldetag: 29.08.1992
(51) Int. Cl.: B32B 5/26, A47C 27/00, A47C 7/24

(54) **Laminiertes Textilmaterial, insbesondere für technische Einsatzzwecke**
Laminated textile material, especially for technical applications
Matériau textile en couches, notamment pour des applications techniques

(30) Priorität: 30.08.1991 DE 9110754 U; 14.09.1991 DE 4130669
(43) Veröffentlichungstag der Anmeldung: 03.03.1993
(73) Patentinhaber: WILHELM KNEITZ & CO. AG, D-95340 Wirsberg (DE); GERTEX TEXTIL GMBH, 89547 Gerstetten (DE); Firma MÜLLER TEXTIL GmbH, D-5276 Wiehl (DE)
(72) Erfinder: Kneitz, Thomas, Dr., W-8655 Wirsberg (DE); Alt, Jörg, W-7929 Gerstetten (DE)
(74) Vertreter: Böhme, Volker, Dipl.-Ing.

(56) Entgegenhaltungen:
- DE-A- 2 853 464
- DE-A- 3 704 529
- DE-U- 9 016 062

## Beschreibung

Die Erfindung betrifft ein laminiertes Textilmaterial, insbesondere für technische Einsatzzwecke, bei dem ein textiler Oberstoff mit einer aus Kunststoff bestehenden druckelastischen Federungslage durchgehend verklebt ist, die nach unten hin eine Gewirkeschicht trägt.

Bei einem durch die Praxis bekannten Textilmaterial dieser Art besteht die Federungslage aus einer Schaumstoffschicht und einer an deren Unterseite aufkaschierten unteren Gewirkeschicht, die z. B. Gaze ist. Auf die Oberseite der Schaumstoffschicht ist der Oberstoff aufkaschiert, der in der erwünschten Musterung gehalten ist. Aufkaschiert bedeutet hier, daß die Verklebung mittels des Schaumstoffes selbst erfolgt. Wenn man das Textilmaterial eines alten Kraftfahrzeugsitzes weiterverwerten will, so könnte man daran denken, den Oberstoff zu zerkleinern, zu zerfasern und aus den Reißfasern ein Vlies herzustellen. Dies scheitert daran, daß sich der Oberstoff nicht in wirtschaftlicher Weise von dem Schaumstoff trennen läßt und in das Vlies keine Schaumstoffstückchen gelangen dürfen.

Es gibt eine ganze Reihe von Einsatzzwecken, bei denen die häufig aus Polyurethan bestehende Schaumstoffschicht wegen der Materialeigenschaften des Schaumstoffes unzweckmäßig oder nachteilig ist. So kann sie beispielsweise einer vorzeitigen Alterung unterliegen, zu Schwierigkeiten bei der Reinigung des Verbundstoffes führen oder eine unerwünscht niedrige Luftdurchlässigkeit aufweisen. Insbesondere in neuerer Zeit kommt hinzu, daß sich solche Verbundstoffe nur schwer oder gar nicht recyclen lassen, weil die aus einem synthetischen Fasermaterial beispielsweise Polyester, bestehenden textilen Oberstoffe sich in wirtschaftlicher Weise nicht mehr von der Polyurethan-Schaumstoffschicht trennen lassen.

Es ist ein laminiertes Textilmaterial gemäß dem Oberbegriff des Patentanspruchs 1 bekannt (DE-U-9016062), bei dem die Oberschicht eine Polyethylenfolie ist, die durch Silikonauftrag oder Aufwalzen aufgebracht wird. Bei vielen technischen Einsatzzwecken ist eine Oberseite des Textilmaterials, die von einer der Gewirkebahnen oder der Polyethylenfolie gebildet ist, unbrauchbar. Dies ist z.B. dann der Fall, wenn ein textiler Oberstoff erwünscht ist, der anders aussieht als die Gewirkebahnen des Abstandsgewirkes.

Eine Aufgabe der Erfindung ist es daher, ein strapazierfähiges Textilmaterial der eingangs genannten Art zu schaffen, dessen Federungslage eine spätere Wiederverwertung des Oberstoffes durch Zerkleinern und Vlieserzeugung nicht beeinträchtigt. Das erfindungsgemäße Textilmaterial weist, diese Aufgabe lösend, die Kennzeichnenden Merkmale des Patentanspruchs 1 auf.

Da das Abstandsgewirke ebenfalls ein textiles Material ist, kann es für eine Wiederverwertung zusammen mit dem Oberstoff zerkleinert und zu Vlies verarbeitet werden. Für die Wiederverwertung braucht der Oberstoff nicht von der Federungslage getrennt zu werden. Es läßt sich auch die Abstandsgewirke-Federungslage zur Vliesherstallung wiederverwerten. Ein zusätzlicher Arbeitsgang für das Anbringen der unteren Gewirkeschicht, (z. B. Gaze), entfällt, da diese von der unteren Gewirkebahn des Abstandsgewirkes gebildet ist. Das Abstandsgewirke ist an sich bekannt (DE-GM 90 16 062) und ist ein Raschelvelourgewirke, dessen bahnflächenverbindenden Fäden monofil elastisch biegbar sind, d.h. Rückstellkraft besitzen. Die eine Gewirkebahn ist mittels des Klebemittels mit dem Oberstoff verbunden. Durch die Vermeidung von Schaumstoff sind auch Emissionen ("Fogging") eliminiert, die bei der Verwendung des Schaumstoffes vorliegen.

Es bestehen der Oberstoff und das Abstandsgewirke aus dem gleichen Synthetikfasermaterial. Die Materialgleichheit ist bei der Wiedarverwertung nützlich. Es läßt sich dann auch ein sartenreines Klebemittal verwenden, das in der Kunststoff- bzw. Synthetikart, z.B. Polyester, an die Kunststoff- bzw. Synthetikart von Oberstoff und Abstandsgewirke angepaßt ist.

Das Abstandsgewirke ist eine zweiflächige Kettenwirkware und kann durch entsprechende Wahl der Dichte der Füllfäden, deren Dicke und deren Materialeigenschaften mit ihren druckelastischen Eigenschaften dem jeweiligen Verwendungszweck angepaßt werden. Der aufgeklebte textile Oberstoff, der in der Regel ein Gewebe oder Gewirk bzw. Gestrick ist, verleiht dem Textilmaterial nicht nur auf der jeweiligen Außenseite die gewünschtan Oberflächaneigenachaften, sondern trägt auch wesentlich zur Stabilität des ganzen Textilmaterials bei. Überraschanderwaise hat sich gezeigt, daß ein solches laminiertes Textilmaterial in hervorragender Weise als Polster-Bezugsstoff, beispielsweise für Automobilsitze, Sitz- und Liegemöbel u.dgl., verwendet werden kann. Diese Verwendung ist deshalb keineswegs selbstverständlich, weil solche Polster-Bezugsstoffe bekanntlich einer besonders harten Beanspruchung ausgesetzt sind. Die doppelflächige Kettenwirkware mit den aufrecht stehenden, zwischen den beiden Gewirkebahnen verlaufenden Füllfäden ergibt das für diesen Verwendungszweck erforderliche Volumen und die nötige Druckelastizität, während der aufgeklebte Oberstoff aus einem entsprechenden Textilstoff, beispielsweise einem Cord, die an die textile Beschaffenheit einer Sitzfläche zu stellenden Anforderungen in hervorragendem Maße erfüllt. Dabei bildet die doppelflächige Kettenwirkware mit einer ihrer Gewirkebahnen gleichzeitig die Abseite dieses laminierten Textilmaterials, so daß es in der Regel genügt, lediglich auf einer Seite ein Gewebe, Gestrick oder Gewirk aufzukleben.

Die Herstellung der die Federungslage bzw. das Füllmaterial bildenden doppelflächigen Kettenwirkware erfolgt auf einer Kettenwirk- oder Raschelmaschine in an sich bekannter Weise (vgl. beispielsweise "Kettenwirk-Praxis",Heft 4, 1970, S.19 bis 20, Weigkricht "Technologie der Kettenwirkerei", Wien 1949, Seiten 116/117). Die Ware wird in der Regel nur als Zwischenprodukt zur Herstellung von Schneidplüsch verwendet, wozu die zwischen den beiden Gewirkebahnen sich erstreckenden Fäden in einer eigenen Plüschschneidemaschine durchgeschnitten werden, so daß sich zwei gleiche Schneidplüschbahnen ergeben. Es ist auch bekannt (DE-OS 32 33 793), eine solche zweiflächige Kettenwirkware im unzerschnittenen Zustand für Miederwaren, insbesondere zur Herstellung von geformten Büstenhaltern, zu verwenden. Dabei bilden aber beide Gewirkebahnen bzw. Grund- oder Deckgewirke unmittelbar die Außenseite des Textilstoffes, wobei sie gegebenenfalls zweckentsprechend gemustert sein können. Ein solcher Textilstoff für Miederwaren ist aber grundsätzlich nicht für härtere Einsatzbedingungen geeignet.

Die Füllfäden der neuen zweiflächigen Kettenwirkware sind mit Vorteil synthetische Fäden hoher Stauchfestigkeit, insbesondere Monofile aus Polyamid oder Polyester. Auch die beiden Gewirkebahnen bzw. Grund- oder Deckgewirke der zweiflächigen Kettenwirkware sind in der Regel aus synthetischen Fäden, beispielsweise Polyester oder Polyamid, gearbeitet, wenngleich sich auch spezielle Fälle denken lassen, in denen Fäden aus natürlichen Fasermaterialien, etwa Baumwolle, Wolle o.dgl., in den Grund- oder Deckgewirken verarbeitet werden.

Da das neue laminierte Textilmaterial im Gegensatz zu den Verhältnissen bei Textil-/Schaumstofflaminaten nur aus textilen Komponenten aufgebaut ist, kann es bei Verwendung des gleichen Materials, beispielsweise Polyester, für alle seine Komponenten sortenrein hergestellt werden, wenn die Forderung nach einem 100% recycelbaren Textilmaterial gestellt wird. Auf diese Weise kann etwa ein Polster-Bezugstoff für Kraftfahrzeugsitze u.dgl. erzeugt werden, der völlig sortenrein aus lediglich einem Kunststoffmaterial besteht. Die zweiflächige Kettenwirkware ist z.B. aus Polyesterfäden hergestellt, während die die Sitzfläche bildende Gewebe- (insbesondere Cord-) Schicht ebenfalls aus Polyesterfäden gearbeitet und mittels eines Polyesterklebstoffes, der in Folien- oder Pulverform zum Einsatz kommt, auf ein Grund- oder Deckgewirk der zweiflächigen Kettenwirkware aufgeklebt ist. Auf der Abseite erübrigt es sich in der Regel, noch zusätzlich einen textilen Oberstoff auf das Grund- oder Deckgewirk aufzukleben, da das Grund- oder Deckgewirk auf dieser Seite bereits die erforderliche Beweglichkeit des Polster-Bezugstoffes bezüglich des Polsterkerns gewährleistet und auch eine einwandfreie Verarbeitung ermöglicht. Wenn aber besondere Einsatzbedingungen es erwünscht erscheinen lassen, auch auf der Abseite eine bestimmte textile Oberflächenbeschaffenheit, wie sie beispielsweise durch ein Vlies oder Non-woven gegeben ist, zu erzielen oder, wenn es etwa darum geht, die Festigkeit und Stabilität des laminierten Textilmaterials weiter zu erhöhen, kann naturgemäß auch auf die die Abseite bildende Gewirkebahn ein entsprechender textiler Oberstoff aufgeklebt werden.

Die Bindung, in der die Gewirkebahnen gearbeitet sind, kann den jeweiligen Einsatzbedingungen entsprechend gewählt werden. Dabei kann die Bindung für beide Gewirkebahnen der zweiflächigen Kettenwirkware gleich oder verschieden sein. Abhängig von der Zahl der bei der Herstellung der Kettenwirkware verwendeten Legeschienen können ein, zwei oder auch mehrere Fadensysteme in den beiden Grund- oder Deckgewirken vorgesehen werden, wobei für die beiden Grund- oder Deckgewirke bzw. Gewirkebahnen auch eine verschiedene Zahl von Legeschienen eingesetzt werden kann.

Grundsätzlich Gleiches gilt auch für die Füllfäden, bei deren Herstellung auch eine oder mehrere Legeschienen verwendet werden können, so daß sich ein Füllfadensystem oder mehrere Füllfadensysteme ergeben, die dann mit gleichen oder unterschiedlichen Fäden gearbeitet sind.

Als zweckmäßig hat es sich herausgestellt, wenn wenigstens ein Grund- oder Deckgewirk in der Bindung Franse-Schuß, zweifadensystemig, gearbeitet ist.

Diese Bindung ergibt eine verhältnismäßig hohe Längen und Breitenstabilität des entsprechenden Gewirkes. Eine andere für den vorliegenden Zweck vorteilhafte Ausführungsform der die Federungslage bildenden zweiflächigen Kettenwirkware zeichnet sich dadurch aus, daß wenigstens ein Grund- oder Deckgewirk in der Bindung Satin-Trikot, zweifadensystemig, gearbeitet ist. Selbstverständlich sind aber auch andere Bindungen, wie sie in der Kettenwirkereitechnik bekannt sind, in Abhängigkeit von den zu erzielenden Eigenschaften des neuen Textilmaterials verwendbar.

Ähnliches gilt auch für die Legung der das wenigstens eine Füllfadensystem bildenden Füllfäden. Als zweckmäßig hat es sich dabei erwiesen, wenn wenigstens ein Füllfadensystem in der Bindung Franse oder Atlas oder Trikot gearbeitet ist, wobei auch Kombinationen dieser Legungen möglich sind.

Das erfindungsgemäße Textilmaterial läßt sich in Kraftfahrzeugen als Bezugmaterial überall dort verwenden, wo bisher herkömmliches mit Schaumstoff und Untergewirke (Gaze) kaschiertes Bezugmaterial eingesetzt wird, z.B. als Seitenwandverkleidung oder an Armlehnen. Bevorzugt ist die Verwendung am Kraftfahrzeugsitz vorgesehen, der ein Sitzstück, eine Rückenlehne, eine Armlehne und eine Kopfstütze umfaßt. In diesem Fall ist vorgesehen, daß das Bezugmaterial am Kraftfahrzeugsitz vorgesehen ist und auf einer inneren Schaumstoffschicht aufliegt und daß die untere Gewirkebahn des Abstandsgewirkes an der inneren Schaumstoffschicht anliegt.

In der Zeichnung sind Ausführungsbeispiele des Gegenstandes der Erfindung dargestellt. Es zeigen:
- Fig. 1: ein laminiertes Textilmaterial im Querschnitt und in schematischer Darstellung zur Veranschaulichung des Aufbaus.
- Fig. 2 bis 7: sechs verschiedene Legungen für die Bindung der die Federungslage des laminierten Textilmaterials nach Fig. 1 bildenden doppelflächigen Kettenwirkware und
- Fig. 8: im Schnitt ein zweites laminiertes Bezugmaterial für Kraftfahrzeugsitze.

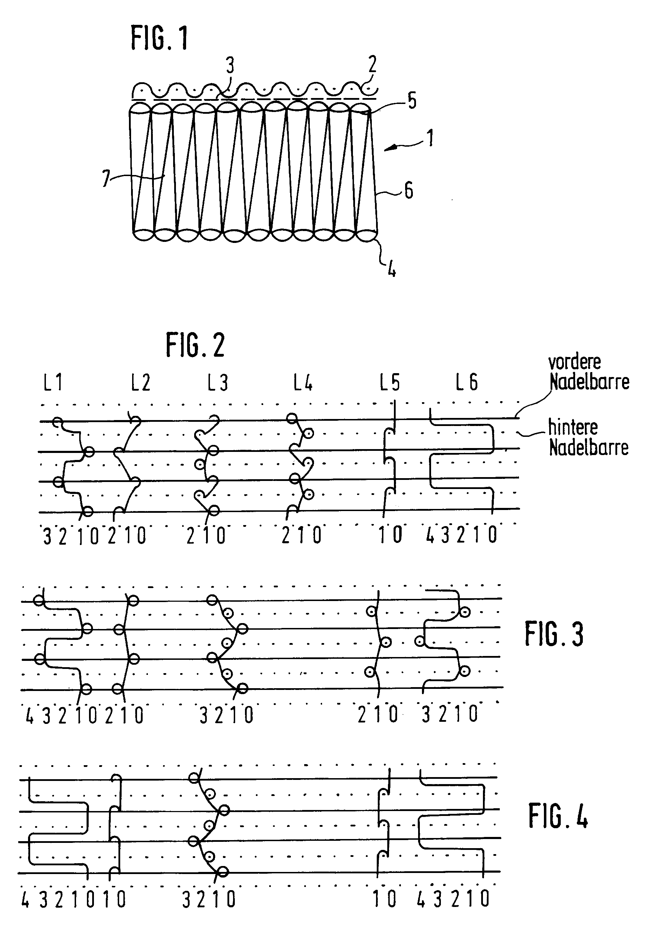

Das in Fig. 1 lediglich schematisch in seinem Aufbau veranschaulichte laminierte Textilmaterial ist zweischichtig aufgebaut. Er weist ein druckelastisches Abstandsgewirke 1 auf, auf das einseitig ein textiler Oberstoff 2 in Gestalt eines Gewebes aufgeklebt ist. Der die Verbindung zwischen dem Gewebe 2 und dem Abstandsgewirke 1 herstellende Klebstoff ist bei 3 angedeutet.

Das Abstandsgewirke 1 besteht aus einer zweiflächigen Kettenwirkware, die zwei im Abstand voneinander angeordnete Gewirkebahnen 4, 5 aufweist, zwischen denen sich in die Gewirkebahnen 4, 5 eingebundene, aufrecht stehende Füllfäden 6 erstrecken. Wie aus Fig. 1 zu ersehen, bildet die untere Gewirkebahn 4 die Abseite des Textilmaterials, während die andere Gewirkebahn 5 das aufgeklebte Gewebe 2 trägt. Die Verbindung zwischen dem Gewebe 2 und der Gewirkebahn 5 erfolgt dabei durch direktes Verkleben des Gewebes 2 mit dem Gewirk (Fabric-to-Fabric-Bonding), wobei bekannte Laminiertechniken zur Herstellung von Verbundstoffen Verwendung finden können, wie sie z.B. in Form von Streichverfahren, Pulverpunktverfahren, Walzenschmelzverfahren etc. gebräuchlich sind. Der thermoplastische Klebstoff 3 kann beim Kleben auch in Folienform zwischen das Gewebe 2 und die Gewirkebahn eingebracht werden.

Die das Abstandsgewirke 1 bildende zweiflächige Kettenwirkware, die im weiteren mit 7 bezeichnet wird, wird in an sich bekannter Weise auf einer Raschelmaschine mit zwei Nadelbarren hergestellt, von denen jeder jeweils eine Nadelreihe trägt. Wegen der Einzelheiten des Aufbaus der Raschelmaschine und der Erzeugung dieser Kettenwirkware wird beispielsweise Bezug genommen auf das Buch "Die Technologie der Kettenwirkerei" von Prof. Alfons Weigkricht. Dipl.-Ing. Rudolf Bohmann-Industrie- und Fachverlag Wien-Heidelberg, 1949, insbesondere Seiten 116/117.

Die Raschelmaschine arbeitet mit mindestens drei Legeschienen, doch kann auch eine größere Anzahl Legeschienen verwendet werden. So finden z.B. zur Erzeugung der in den Fig. 2 bis 7 dargestellten Legungen sechs Legeschienen Verwendung, die mit L1 bis L6 bezeichnet sind.

Die vorderen beiden Legeschienen L1, L2 und die beiden hinteren Legeschienen L5, L6 arbeiten jeweils nur auf die ihnen zugeordnete vordere oder hintere Nadelreihe der entsprechenden Nadelbarre. Sie bilden dabei mit ihren Fäden 8, 9 bzw. 10, 11 jeweils eine der beiden Gewirkebahnen 4 bzw. 5.

Die zwei mittleren Legeschienen L3, L4 legen ihren Faden 12 bzw. 13 von der einen Nadelreihe zu der anderen Nadelreihe, wobei die so gebildeten langen Platinenmaschen die Füllfäden 6 (Fig. 1) bilden, die sich zwischen den im Abstand stehenden, jeweils von den beiden Legeschienen L1, L2 bzw. L5, L6 gearbeiteten beiden Gewirkebahnen 4, 5 aufrechtstehend erstrecken und in diese eingebunden sind.

Die allgemein in ihrer Gesamtheit mit 6 bezeichneten Füllfäden ergeben eine druckelastische, luftdurchlässige Füllmaterialschicht zwischen der den aufgeklebten Oberstoff 2 tragenden Gewirkebahn 5 und der den Unterstoff mit der Abseite bildenden Gewirkebahn 4.

Die Dichte des von den Füllfäden 6 gebildeten Füllmaterials kann entsprechend den jeweiligen Anforderungen an das Textilmaterial eingerichtet werden. Durch Verwendung von stauchfesten, dickeren Füllfäden oder -garnen, eine erhöhte Reihenzahl und einen größeren Versatz von Nadelreihe zu Nadelreihe läßt sich eine größere. Dichte des Abstandsgewirkes 1 erreichen, ebenso wie durch den Einsatz von mehreren, auf beide Nadelreihe legenden mittleren Legeschienen.

Die Länge der Füllfäden 6 und damit die Dicke des Abstandsgewirkes 1 sind durch entsprechende Einstellung des Nadelbarren- bzw. Fräsblechabstandes der Raschelmaschine in weiten Grenzen veränderbar.

Die einzelnen Legeschienen L1 bis L6 können mit gleichen oder mit verschiedenen Fäden 8 bis 13 arbeiten. Auch die Zahl der Legeschienen, die auf die beiden Nadelreihen arbeiten, können, wie schon erwähnt, gleich oder unterschiedlich gewählt sein, wie auch die Zahl der mittleren Legeschienen, die die Füllfäden 6 legen, durch die jeweiligen Anforderungen an die Eigenschaften des Abstandgewirkes 1 bestimmt ist.

In den Fig. 2 bis 7 sind sechs verschiedene, als Abstandsgewirke 1 (Fig. 1) in Frage kommende doppelflächige Kettenwirkwaren 7 (Fig. 1) anhand ihrer Legung veranschaulicht. Die Ziffern geben die Verschiebungen der Legeschienen L1 bis L6. an.

Bei der Legung nach Fig. 2 weist die von den vorderen beiden Legeschienen L1, L2 gearbeitete Gewirkebahn 4, 5 eine Tuch-Trikot-Bindung, zweifadensystemig (gegenlegig), auf, während die beiden hinteren Legeschienen L5, L6 ein Grund- oder Deckgewirk 4, 5 in der Bindung Franse-Schuß, zweifadensystemig, arbeiten. Die mittleren beiden Legeschienen L3, L4 legen zwei Füllfadensysteme, jeweils in Trikotlegung (gegenlegig).

Die Tuch-Trikot-Bindung ergibt ein dehnbareres Gewirk als die Franse-Schuß-Bindung mit der Folge, daß die beiden Grund- oder Deckgewirke 4, 5 der doppelflächigen Kettenwirkware nach Fig. 2 unterschiedliche Dehnungseigenschaften in (Längs- und Breitenrichtung) aufweisen. In der Schußlegung ist der Faden 11 unter vier Nadeln gelegt, womit eine beträchtliche Festigkeit und Stabilität in Schußrichtung erreicht wird. In der Regel werden Schußlegungen von null bis sechs Nadeln in Frage kommen.

Bei der Ausführungsform nach Fig. 3 sind beide Gewirkebahnen jeweils in einer Satin-Trikot-Bindung (geschlossen gegenlegig) gearbeitet, während lediglich eine mittlere Legeschiene L3 einen Faden 12 in Atlaslegung (gleichlegig) verarbeitet hat. Damit ergibt sich eine geringere Dichte der Füllfäden und ein insgesamt lockeres dehnfähiges Abstandsgewirke 1 (Fig. 1).

Die beiden Gewirkebahnen 4, 5 der Ausführungsform nach Fig. 4 sind jeweils in der Bindung Franse-Schuß gearbeitet. Ähnlich wei bei der Ausführungsform nach Fig. 3 ist lediglich ein Füllfadensystem vorhanden, das von der Legeschiene L13 in Atlaslegung (geschlossen) verarbeitet ist. Die beiden Gewirkebahnen 4, 5 zeichnen sich zufolge ihrer Bindung durch eine verhältnismäßig hohe Festigkeit aus, während die Dichte der Füllfäden 6 (Fig. 1) geringer ist als beispielsweise bei der Ausführungsform nach Fig. 1. Es kann aber andererseits ein dickerer Faden 12 verarbeitet sein.

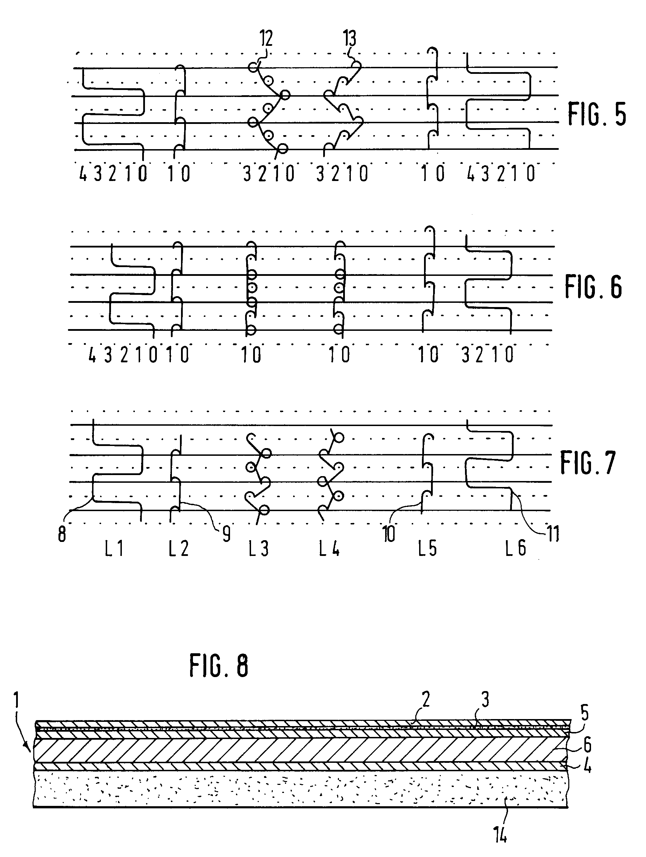

Bei der Ausführungsform nach Fig. 5 sind die beiden Gewirkebahnen von den Legeschienen L1, L2 bzw. L5, L6 ebenso wie bei der Ausführungsform nach Fig. 4 in der Bindung Franse-Schuß gearbeitet, was in gleichem Maße auch für die Ausführungsformen nach den Fig. 6, 7 gilt. Bei allen drei erwähnten Ausführungsformen sind zwei Füllfadensysteme vorhanden, die von den mittleren Legeschienen L3, L4 hergestellt werden.

Bei der Ausführungsform nach Fig. 5 arbeitet die mittlere Legeschiene L3 mit Atlaslegung (geschlossen), während die andere mittlere Legeschiene L4 ihren Faden 13 ebenfalls in Atlaslegung (aber offen gegenlegig) verarbeitet. Durch diese Legung der mittleren Fäden 12, 13 ergibt sich eine relativ starke V- oder dachförmige Neigung der Füllfäden 6, wie sie in Fig. 1 veranschaulicht ist. Damit wird die Seitenstabilität des Abstandsgewirkes 1 erhöht, was insbesondere dann von Bedeutung ist, wenn mit größeren Scherkrafteinwirkungen zu rechnen ist.

Demgegenüber sind bei der Ausführungsform nach Fig. 6 die von den mittleren Legeschienen L3, L4 zugeführten Fäden 12, 13 in Fransenlegung eingearbeitet. Die Füllfäden 6 der Fig. 1 sind damit im wesentlichen parallel ausgerichtet.

Bei der Ausführungsform nach Fig. 7 schließlich sind die beiden die Füllfäden 6 bildenden Fäden 12, 13 in Trikotlegung (gegenlegig) verarbeitet. Diese Ausführungsform zeichnet sich durch eine besonders hohe Seitenstabilität und Dichte der Füllfäden 6 aus, während andererseits die beiden in der Bindung Franse-Schuß, zweifadensystemig, gearbeiteten Gewirkebahnen 4, 5, deren Franse jeweils mit der Trikotlegung des benachbarten Fadens 12 bzw. 13 gleichlegig ist, besonders fest sind.

In den Fig. 2 bis 7 sind die vordere und die hintere Nadelbarre jeweils in der üblichen Weise durch einen Strich bzw. eine Punktereihe angedeutet, worauf der Ordnung halber hingewiesen sei.

Das beschriebene neue laminierte Textilmaterial ist besonders auch zur Verwendung als Polyester-Bezugsstoff, beispielsweise für Kraftfahrzeugsitze, geeignet. Beispiele von für diesen Verwendungszweck geeigneten Fadenkombination zur Herstellung der das Abstandsgewirke 1 bildenden doppelflächigen Kettenwirkware sind in der nachstehenden Tabelle aufgeführt, die jedoch keine Beschränkung bedeutet.

**Tabelle**

| Beispiele für in der doppelflächigen Wirkware 7 verwendete Fäden 8 bis 13: | | |
|---|---|---|
| | für Polyester | für Polyamid |
| vorn: L1, L2 | dtex 50 oder 76 | dtex 44 oder 67 |
| Mitte: L3, L4 | dtex 18,22, od. 33 Monofil | dtex 18, 22. od. 33 Monofil |
| hinten: L5, L6 | dtex 50 oder 76 | dtex 44 oder 67 |

Das Bezugsmaterial gemäß Fig. 8 ist an einem nicht näher gezeigten Teil eines Kraftfahrzeugsitzes vorgesehen und dieses Teil umfaß eine innere Schaumstoffschicht 14, auf der das Bezugmaterial aufliegt. Das Bezugmaterial umfaßt nach außen hin einen Oberstoff 2, der in der gewünschten Bemusterung gehalten ist. Der Oberstoff 2 ist durch eine Schicht von Klebemittel 3 an ein Abstandsgewirke 1 mit Federungseigenschaften geklebt und zwar an dessen eine Gewirkebahn 5. Diese Gewirkebahn 5 steht über elastisch biegbare Abstandsfäden 6 mit einer zweiten Gewirkebahn 4 in Verbindung, die auf der Schaumstoffschicht 14 aufliegt.

## Patentansprüche

1. Laminiertes Textilmaterial für technische Einsatzzwecke, bei dem eine aus Kunststoff bestehende druckelastische Federungslage vorgesehen ist, die aus einem füllungsfreien Abstandsgewirke (1) besteht, bei dem zwischen zwei Gewirkebahnen (4, 5) eine Abstandsstruktur vorgesehen ist, die aus bahnflächenverbindenden Maschen mit monofilen elastischen Füllfäden (6) besteht, die abwechselnd mit je einer der Gewirkebahnen (4, 5) vermascht sind, und
bei dem das Abstandsgewirke (1) nach oben hin mit einer Oberschicht (2) durchgehend verklebt ist,
dadurch gekennzeichnet,
daß die Oberschicht ein textiler Oberstoff (2) ist und für die Verklebung des Abstandgewirkes (1) mit dem Oberstoff (2) ein zusätzliches Klebemittel (3) vorgesehen ist und
daß der Oberstoff (2) und das Abstandsgewirke (1) aus dem gleichen Synthetikfasermaterial bestehen.

2. Textilmaterial nach Anspruch 1, dadurch gekennzeichnet, daß der textile Oberstoff ein Gewebe (2), Gestrick oder Gewirk ist.

3. Textilmaterial nach Anspruch 1 oder 2, dadurch gekennzeichnet, daß die Füllfäden (6) synthetische Fäden hoher Stauchfestigkeit sind.

4. Textilmaterial nach einem der vorhergehenden Ansprüche, dadurch gekennzeichnet, daß die beiden Gewirkebahnen (4, 5) mit gleicher Bindung gearbeitet sind.

5. Textilmaterial nach einem der Ansprüche 1 bis 3, dadurch gekennzeichnet, daß die beiden Gewirkebahnen (4, 5) mit ungleicher Bindung gearbeitet sind.

6. Textilmaterial nach einem der vorhergehenden Ansprüche, dadurch gekennzeichnet, daß das Abstandsgewirke (7) wenigstens zwei von hierzu vorgesehenen Legeschienen (L3, L4) gearbeitete Füllfadensysteme aufweist.

7. Textilmaterial nach Anspruch 6, dadurch gekennzeichnet, daß die Füllfäden (12, 13) der Systeme gleich sind.

8. Textilmaterial nach Anspruch 6, dadurch gekennzeichnet, daß die Füllfäden (12, 13) beider Systeme verschieden sind.

9. Textilmaterial nach einem der vorhergehenden Ansprüche, dadurch gekennzeichnet, daß wenigstens eine Gewirkebahn (4, 5) in der Bindung Franse-Schuß, zweifadensystemig, gearbeitet sind.

10. Textilmaterial nach einem der vorhergehenden Ansprüche, dadurch gekennzeichnet, daß wenigstens eine Gewirkebahn (4, 5) in der Bindung Satin-Trikot, zweifadensystemig, gearbeitet ist.

11. Textilmaterial nach einem der vorhergehenden Ansprüche, dadurch gekennzeichnet, daß wenigstens ein Füllfadensystem (6) in der Bindung Franse oder Atlas oder Trikot gearbeitet ist.

12. Textilmaterial nach einem der vorhergehenden Ansprüche, dadurch gekennzeichnet, daß es sortenrein aus lediglich einem Kunststoffmaterial besteht.

13. Textilmaterial nach Anspruch 12, dadurch gekennzeichnet, daß das Kunststoffmaterial Polyester ist.

14. Textilmaterial nach einem der Ansprüche 1 bis 13, dadurch gekennzeichnet, daß es Polyamidfäden enthält.

15. Kraftfahrzeugsitz versehen mit einem Textilmaterial nach Anspruch 1, wobei das Textilmaterial auf einer inneren Schaumstoffschicht (14) aufliegt und die untere Gewirkebahn (4) des Abstandsgewirkes (1) an der inneren Schaumstoffschicht (14) anliegt.

16. Verwendung des Textilmaterials nach einem der vorhergehenden Ansprüche als Polster-Bezugsstoff, insbesondere für Kraftfahrzeugsitze und Sitz- oder Liegemöbel.

## Claims

1. A laminated textile material for technical applications and for which a plastic pressure-resilient cushioning layer is provided which comprises a filling-tree spacing knitted fabric (1) for which a spacing structure provided between two knitted fabric strips (4, 5) comprises loops, which connect the strip surfaces and have monofilament resilient wadding threads (6), alternately meshed to each one of the knitted fabric strips (4, 5), and in which the spacing knitted fabric (1) is fastened by adhesion over its entire top to an upper layer (2)
**characterised in that**
the upper layer is a textile top material (2) and an additional adhesive (3) is provided for fastening by adhesion tile spacing knitted fabric (1) to the top material (2), and the top material (2) and the spacing knitted fabric (1) consist of the same synthetic fibrous material.

2. A textile material according to Claim 1, **characterised in that** the textile top material is a woven (2) or knitted material.

3. A textile material according to Claim 1 or 2, **characterised in that** the wadding threads (6) are synthetic threads with high resistance to crushing.

4. A textile material according to one of the preceding claims, **characterised in that** both knitted fabric strips (4, 5) are worked with an identical weave.

5. A textile material according to one of Claims 1 to 3, **characterised in that** both knitted fabric strips (4, 5) are produced with a different weave.

6. A textile material according to one of the preceding claims, **characterised in that** the spacing knitted fabric (7) has at least two wadding thread systems operated by the guide rails (L3, L4) provided for this purpose.

7. A textile material according to Claim 6, **characterised in that** the wadding threads (12, 13) of the systems are identical.

8. A textile material according to Claim 6, **characterised in that** that the wadding threads (12, 13) of both systems are different.

9. A textile material according to one of the preceding claims, **characterised in that**, at least one knitted fabric strip (4, 5) is produced using the fringe-weft weave in a double thread system.

10. A textile material according to one of the preceding claims, **characterised in that**, at least one knitted fabric strip (4, 5) is produced using the satin-tricot weave in a double thread system.

11. A textile material according to one of the preceding claims, **characterised in that**, at least one wadding thread system (6) is produced using the fringe, satin or tricot weave.

12. A textile material according to one of the preceding claims, **characterised in that** it consists of only one kind of man-made material.

13. A textile material according to Claim 12, **characterised in that** the man-made material is polyester.

14. A textile material according to one of Claims 1 to 13, **characterised in that** it contains polyamide threads.

15. A car seat provided with a textile material according to Claim 1, wherein the textile material rests on an inner foam material layer (14) and the lower knitted fabric strip (4) of the spacing knitted fabric (1) rests on the inner foam material layer (14).

16. An application of the textile material according to one of the preceding claims as a cushion upholstery fabric, in particular, for car seats and furniture for sitting or lying on.

## Revendications

1. Matériau textile en couches peur des applications techniques, peur lequel on prévoit une couche de suspension élastique, élastique à la compression, constituée d'une matière synthétique, qui est constituée d'un tissu d'écartement à mailles (1) exempt de matière de remplissage, peur lequel on prévoit une structure d'écartement entre deux voies du tissu à mailles (4, 5), qui est constituée de mailles liant les surfaces des voies avec des fils de remplissage (6) élastiques monofilaires, qui sont reliés par mailles en alternance avec à chaque fois une des voies du tissu à mailles (4, 5) et peur lequel le tissu d'écartement à mailles (1) est collé en continu vers le haut avec une couche supérieure (2),
caractérisé
en ce que la couche supérieure est une matière textile supérieure (2) et qu'on prévoit peur l'adhésion du tissu d'écartement à mailles (1) avec la matière supérieure (2) un adhésif supplémentaire (3) et en ce que la matière supérieure (2) et le tissu d'écartement à mailles (1) sont constitués du même matériau de fibres synthétiques.

2. Matériau textile selon la revendication 1, caractérisé en ce que la matière textile supérieure (2) est un tissu, un tricot ou un tissu à mailles.

3. Matériau textile selon la revendication 1 ou 2, caractérisé en ce que les fils de remplissage (6) sont des fils synthétiques ayant une résistance à l'écrasage élevée.

4. Matériau textile selon l'une quelconque des revendications précédentes, caractérisé en ce que les deux voies du tissu à mailles (4, 5) sont travaillées avec la même armure.

5. Matériau textile selon l'une quelconque des revendications 1 à 3, caractérisé en ce que les deux voies du tissu à mailles (4, 5) sont travaillées avec une armure différente.

6. Matériau textile selon l'une quelconque des revendications précédentes, caractérisé en ce que le tissu d'écartement à mailles (7) présente au moins deux systèmes de fils de remplissage travaillés par des barres à passettes (L3, L4) prévues pour cela.

7. Matériau textile selon la revendication 6, caractérisé en ce que les fils de remplissage (12, 13) des systèmes sont identiques.

8. Matériau textile selon la revendication 6, caractérisé en ce que les fils de remplissage (12, 13) des deux systèmes sont différents.

9. Matériau textile selon l'une quelconque des revendications précédentes, caractérisé en ce qu'au moins une voie du tissu à mailles (4, 5) est travaillée dans l'armure frange-trame, selon un système à deux fils.

10. Matériau textile selon l'une quelconque des revendications précédentes, caractérisé en ce qu'au moins une voie du tissu à mailles (4, 5) est travaillée dans l'armure satin-tricot, selon un système à deux fils.

11. Matériau textile selon l'une quelconque des revendications précédentes, caractérisé en ce qu'au moins un système de fils de remplissage (6) est travaillé dans l'armure frange ou satin effet trame ou tricot.

12. Matériau textile selon l'une quelconque des revendications précédentes, caractérisé en ce qu'il est d'un peint de vue purement du type constitué uniquement d'une matière synthétique.

13. Matériau textile selon la revendication 12, caractérisé en ce que la matière synthétique est le polyester.

14. Matériau textile selon l'une quelconque des revendications 1 à 13, caractérisé en ce qu'il contient des fils de polyamide.

15. Siège de véhicule automobile muni d'un matériau textile selon la revendication 1, le matériau textile étant posé sur une couche interne de mousse (14) et la voie inférieure du tissu à mailles (4) du tissu d'écartement à mailles (1) est adjacente à la couche interne de mousse (14).

16. Utilisation du matériau textile selon l'une quelconque des revendications précédentes en tant que matière de revêtement peur coussins, en particulier peur des sièges de véhicules automobiles et des fauteuils ou des chaises longues.
